(19) **Europäisches Patentamt / European Patent Office / Office européen des brevets**

(11) **EP 2 268 494 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
**B60C 23/04** (2006.01)

(21) Anmeldenummer: **09721014.0**

(22) Anmeldetag: **10.03.2009**

(86) Internationale Anmeldenummer:
**PCT/EP2009/052761**

(87) Internationale Veröffentlichungsnummer:
**WO 2009/112477 (17.09.2009 Gazette 2009/38)**

(54) **VORRICHTUNG ZUR ENERGIEERZEUGUNG IN EINEM ROTIERENDEN SYSTEM**

DEVICE FOR GENERATING ENERGY IN A ROTATING SYSTEM

DISPOSITIF DE PRODUCTION D'ÉNERGIE DANS UN SYSTÈME EN ROTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.03.2008 DE 102008013498**

(43) Veröffentlichungstag der Anmeldung:
**05.01.2011 Patentblatt 2011/01**

(73) Patentinhaber: **CeramTec GmbH**
**73207 Plochingen (DE)**

(72) Erfinder:
• **SCHREINER, Dr. Hans-Jürgen**
**91233 Neunkirchen Am Sand-rollhofen (DE)**
• **BINDIG, Reiner**
**95463 Bindlach (DE)**
• **TZSCHENTKE, Konrad**
**91224 Pommelsbrunn (DE)**
• **KELNBERGER, Dr. Alfons**
**96047 Bamberg (DE)**

(74) Vertreter: **Uppena, Franz et al**
**Patente, Marken & Lizenzen**
**c/o Chemetall GmbH**
**Trakehner Straße 3**
**60487 Frankfurt am Main (DE)**

(56) Entgegenhaltungen:
EP-A- 1 605 528          EP-A- 1 650 057
US-A1- 2004 078 662      US-A1- 2006 260 390

**EP 2 268 494 B1**

## Beschreibung

Die Erfindung betrifft eine Vorrichtung zur Erzeugung von elektrischer Energie in einem rotierenden System zur Versorgung von elektronischen Bauteilen im System mit Strom, mit auf das System einwirkenden äußeren Kräften, die auf piezoelektrisch aktive Energiewandler im System wirken wodurch elektrische Energie erzeugt wird, und mit einer Elektronik zur Verarbeitung der erzeugten elektrischen Energie und Weiterleitung dieser an die Bauteile.

Derartige Vorrichtungen sind aus der DE 603 10 104 T2 und der EP 165 0057 A2 bekannt. Hier wird im Inneren eines Reifens bzw. Luftreifens ein piezoelektrisches Element und eine zum Kontakt mit dem piezoelektrischen Element vorgesehene Betätigungsmasse und eine Steuerschaltung angeordnet, welche mit dem piezoelektrischen Element in elektrischer Verbindung steht. Die Betätigungsmasse ist zum Auslenken des piezoelektrischen Elements als Folge von äußeren Kräften vorgesehen, welche im Gebrauch auf die Betätigungsmasse wirken, um eine elektrische Ladung zu erzeugen. Diese elektrische Ladung bzw. Energie wird von der Steuerschaltung Bauteilen zur Verfügung gestellt.

Nachteilig ist hieran, dass das piezoelektrische Element und die Betätigungsmasse schwer sind und das rotierende System oder den Reifen in seinen Rotationseigenschaften beeinflusst. Außerdem kann diese Vorrichtung in der Regel nicht eine ausreichende Energie zur Verfügung stellen, um beispielsweise Sensoren und Übertragungselemente dauerhaft und zuverlässig zu versorgen, und dabei auch unter extremen Beschleunigungsverhältnissen von einigen 10.000 g zuverlässig und über eine lange Lebensdauer funktionieren.

Es sind neben kapazitiven und induktiven Systemen zur Energieübertragung, und Batterien oder Akkumulatoren zur Energiespeicherung auch Systeme auf piezokeramischer Basis bekannt, die je nach Konstruktion - beispielsweise in der Ausführung als Massenschwinger - relativ empfindlich gegenüber den in einem Reifen als rotierendes System auftretenden Kräften und Deformationen während des Betriebs sind, die zur schnellen Zerstörung der Bauteile führen können.

Es sind auch Lösungen bekannt, die in eine innere Lage der Reifenlauffläche integriert sind und somit aufgrund ihrer Masse stark die Laufruhe beeinträchtigen bzw. relativ starke Unwuchten erzeugen.

Der Erfindung liegt die Aufgabe zugrunde, eine Vorrichtung nach dem Oberbegriff des Anspruchs 1 so zu verbessern, dass das System so wenig wie möglich in seinen Rotationseigenschaften beeinflusst wird. Außerdem soll die Vorrichtung möglichst viel Energie zur Verfügung stellen, um beispielsweise Sensoren und Übertragungselemente dauerhaft und zuverlässig zu versorgen, und dabei auch unter extremen Beschleunigungsverhältnissen von einigen 10.000 g zuverlässig und über eine lange Lebensdauer funktionieren.

Erfindungsgemäß wird diese Aufgabe dadurch gelöst, dass die piezoelektrisch aktiven Energiewandler piezokeramische Fasern sind, die jeweils über eine Elektrode verfügen und die Elektroden der Fasern, die eine Ladung gleicher Polarität erzeugen, über eine elektrisch leitende Außenelektrode verbunden sind. Die auf das System einwirkenden äußeren Kräfte bewirken Beschleunigungsänderungen im Betrieb, wodurch sich die Fasern kurzzeitig verformen und elektrische Ladungen generieren. Diese Ladungen werden abgegriffen und als elektrische Energie den Bauteilen zur Verfügung gestellt. Piezokeramische Fasern sind leicht, so dass das System in seinen Rotationseigenschaften quasi nicht beeinflusst wird. Außerdem lässt sich genügend viel Energie zur Verfügung stellen, um beispielsweise Sensoren und Übertragungselemente dauerhaft und zuverlässig zu versorgen, und dabei auch unter extremen Beschleunigungsverhältnissen von einigen 10.000 g zuverlässig und über eine lange Lebensdauer zu funktionieren.

Die Fasern sind voneinander mechanisch entkoppelt, wodurch jede Faser ihren Beitrag zur Ladungserzeugung beiträgt.

In bevorzugter Ausführungsform ist das rotierende System ein Reifen, insbesondere für ein Kraftfahrzeug.

In einer bevorzugter Ausgestaltung sind die piezokeramischen Fasern an der Innenseite des rotierenden Systems und bei einem Reifen an der Innenseite der Lauffläche angebracht oder sind in diese integriert. Hierdurch werden sie direkt durch die von außen einwirkenden Kräfte verformt. Wenn sie in die Lauffläche integriert werden, kann dies schon bei der Reifenherstellung geschehen und ist für den Kunden nicht sichtbar. Außerdem sind die Fasern dann geschützt.

Die Fasern sind bevorzugt in Querrichtung zur Lauffläche des rotierenden Systems oder Reifens und bevorzugt parallel zueinander angeordnet. Dies hat den Vorteil, dass die Fasern stabiler gegenüber Verformungen des Systems oder Reifens sind und diese Belastungen leichter stand halten.

Die Fasern weisen einen Durchmesser von 0,01 mm - 5 mm, bevorzugt von 0,05 mm - 2 mm, besonders bevorzugt 0,1 mm - 0,5 mm auf. Bei diesen Durchmessern sind die Fasern einerseits stabil und generieren andererseits genügend Ladungen.

In einer erfinderischen Ausgestaltung werden die Fasern durch Extrusion hergestellt. Sie sind hierdurch besonders kostengünstig und in beliebiger Länge herzustellen.

Die Fasern können jedoch auch durch Zersägen einer plattenförmigen Piezokeramikscheibe hergestellt sein. Hierbei weisen die Fasern in der Regel einen rechteckigen oder quadratischen Querschnitt auf. Die bevorzugten Maßangaben gelten hier entsprechend.

In bevorzugter Ausführungsform sind die Fasern zur Ableitung der entstehenden Ladungen über eine hochflexible, dreidimensional strukturierte, metallische Außenelektrode zu Gruppen von Fasern verbunden, die durch die auf das System oder den Reifen wirkende Kräfte und Deformationen nicht zerstört wird.

In erfinderischer Ausgestaltung besteht die Außenelektrode aus einem feinen Drahtnetz. Ein Drahtnetz ist hochflexibel, dreidimensional strukturiert und metallisch.

In weiterer erfinderischer Ausgestaltung ist der Abstand der Fasern oder der Gruppen von Fasern so gewählt, dass die erzeugte Ladung einzelner Fasern oder Gruppen von Fasern nie gleichzeitig die gegensätzliche Polarität haben. Hierdurch verstärken sich die Ladungen und heben sich nicht gegenseitig auf.

Bevorzugt sind die Fasern oder die Gruppen von Fasern, die eine Ladung gleicher Polarität erzeugen, elektrisch zusammengefasst sind und mit einer getrennten Gleichrichterschaltung verbunden, so dass eine Neutralisation der Ladungen unterbleibt.

Die piezoelektrischen Fasern werden dadurch hergestellt , dass die Fasern im unbenutzten Neuzustand, d.h. als Rohlinge piezokeramische Platten oder Plättchen sind, die während des Herstellungsprozesses mechanisch so bearbeitet werden, dass sie bei der Produktion oder während des Betriebs automatisch in definierte Fasern zerbrechen. Zum Beispiel können die Platten oder Plättchen mit Prägungen versehen werden, entlang derer die Platten oder Plättchen zerbrechen können.

Bevorzugt wird die Vorrichtung zur Messung des Reifendrucks und/oder zur Bestimmung der fahrbahn- und/ oder fahrdynamischen Eigenschaften eines Kraftfahrzeugs verwendet.

Das mit der Vorrichtung gemessene Signal (Ladung) kann mit einem Sollwert verglichen werden und bei Überschreitung oder Unterschreitung des Sollwerts ein Signal angezeigt werden. Zum Beispiel würde ein zu niedriger Luftdruck im Reifen ein Signal verursachen, welches vom Sollwert abweicht.

Nachfolgend wird die Erfindung weiter erläutert.

Die Erfindung zeichnet sich in einer bevorzugten Ausführungsform dadurch aus, dass auf einer Innenfläche der Reifenlauffläche piezoelektrisch aktive Bauteile, insbesondere piezokeramische Fasern integriert werden, die aufgrund der Beschleunigungsänderungen im Betrieb elektrische Ladungen generieren, und außerdem bedingt durch ihre Anordnung quer zur Laufrichtung relativ große mechanische Deformationen des Reifens überstehen.

Unter Fasern bzw. piezokeramische Fasern wird ein im Verhältnis zur Länge dünnes und flexibles Gebilde verstanden. Unter Fasern wird auch ein Verbund von Fasern verstanden, der eine bestimmte Faserstruktier bildet. Der Querschnitt der Fasern kann beliebig ausgebildet sein und zum Beispiel rund oder eckig oder eine Kombination hiervon sein. Eine Struktur aus Fasern ist fester und häufig steifer als eine Konstruktion der gleichen Form aus dem kompakten Werkstoff "aus dem Vollen".

Eine Variante der erfindungsgemäßen Vorrichtung bei einem Reifen für Kraftfahrzeuge besteht darin, dass über den Umfang Reifeninnenfläche piezoelektrische Faserstrukturen angeordnet werden, die mit dem Reifen rotieren. Diese Faserstrukturen stehen über elektrische Kontakte in Verbindung mit einer elektronischen Einheit, welche die erzeugten Energien abgreifen, speichern, verwalten und zur Verfügung stellen kann.

Prinzipiell ist ein frei aufgehängter, rotierender Reifen Zentrifugalkräften ausgesetzt, wobei die dazu korrespondierenden Beschleunigungen lediglich vom Radius des Reifens und der Winkelgeschwindigkeit abhängen. Ohne Einwirkung von äußeren Kräften lässt sich mit der erfindungsgemäßen Vorrichtung keine elektrische Energie erzeugen.

Im Fahrbetrieb treten aufgrund der Einwirkung von äußeren Kräften, die zur Verformung des Reifens an der Aufstandsfläche führen, sehr hohe Beschleunigungskräfte auf, die in den piezoelektrischen Komponenten aufgrund der piezoelektrischen Eigenschaften beispielsweise von Faserstrukturen elektrische Ladungsmengen Q erzeugen, womit beispielsweise ein Kondensator mit der Kapazität C aufgeladen werden kann. Diese Energie E mit

$$E = \frac{1}{2} \cdot \frac{Q^2}{C}$$

kann als elektrische Energie abgerufen werden.

Erfindungsgemäß wirksame Beschleunigungskräfte entstehen immer dann, wenn die Lauffläche des Reifens mit der Fahrbahn in Kontakt kommt. Dabei wird der Reifen deformiert und somit seine gleichmäßige Kreisbewegung gestört. Das führt dazu, dass Beschleunigungsänderungen auftreten, die mit Kraftstößen auf die piezokeramischen Bauteile einhergehen und die erfindungsgemäße Ladungstrennung bewirken.

Entscheidend für die hohen Beschleunigungswerte und damit entscheidend für eine signifikante Ladungserzeugung ist hauptsächlich die Länge des Zeitintervalls $\Delta t$, in dem die Lauffläche des Reifens deformiert und damit die Bewegungsrichtung der Fasern geändert wird.

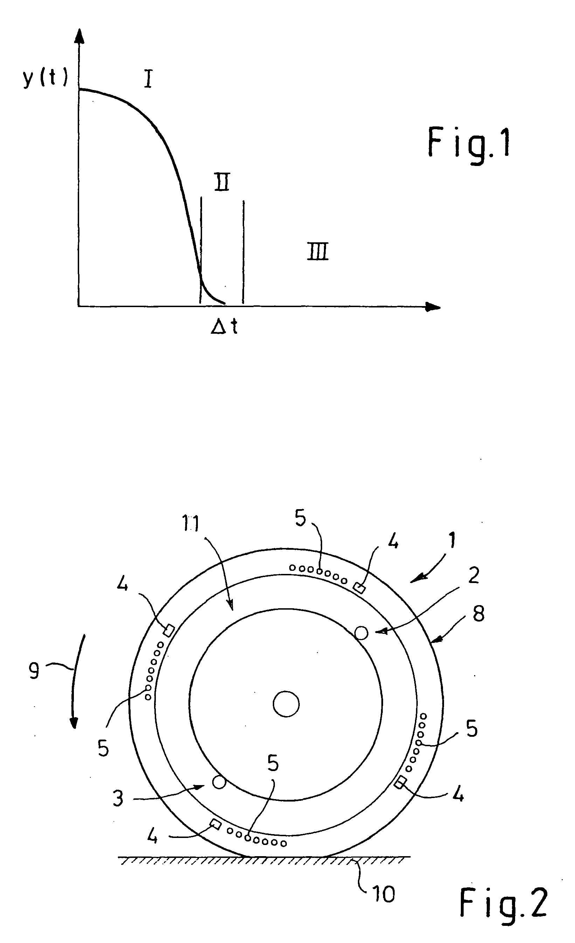

Fig. 1 zeigt den prinzipiellen zeitlichen Verlauf eines Punktes auf der Lauffläche eines Reifens eines Kraftfahrzeuges in y-Richtung mit dem Bereich des Auftreffens auf die Fahrbahn. Fig. 1 stellt somit angenähert der Bewegungsverlauf eines Punktes auf der Lauffläche dar. Im Bereich I rotiert der Reifen gleichmäßig, im Bereich II beginnt er sich zu verformen und schlägt auf die Fahrbahn auf und im Bereich III ist er mit der Fahrbahn im Kontakt.

Durch eine geeignete Näherungsrechnung lässt sich abschätzen, dass die Beschleunigungswerte, denen die piezoelektrischen Bauteile im Bereich II ausgesetzt sind, proportional zu $1/(\Delta t)^2$ sind ($\Delta t$ gibt das Zeitintervall an, in dem die Lauffläche des Reifens deformiert und damit die Bewegungsrichtung der Fasern geändert wird). Je nach Beschaffenheit und den elastischen Eigenschaften des Reifens und der Winkelgeschwindigkeit abhängig von der Geschwindigkeit des Fahrzeugs kann dieses Zeitintervall $\Delta t$ extrem kurz werden, so dass Beschleunigungen in der Größenordnung von 10.000 g auftreten.

Zusätzliche Einflüsse aufgrund von Fahrbahnunebenheiten oder sonstigen fahrdynamischen Faktoren, aufgrund derer zusätzliche Kräfte entstehen und zur Ladungsgenerierung beitragen, sind hier nicht berücksichtigt.

Eine erste Abschätzung der zu erzeugenden Ladung bei diesen hohen Beschleunigungen lässt sich folgendermaßen treffen:

Werden die piezoelektrischen Bauteile oder Fasern im $d_{33}$ Mode betrieben, so gilt folgender Zusammenhang zwischen erzeugter Ladung und wirkender Kraft:

$$Q = d_{33} \cdot F$$

wobei d33 die piezoelektrische Ladungskonstante darstellt und beispielsweise in der Größenordnung von 400 pC/N liegt.

Liegt auf den piezokeramischen Materialien eine Masse von beispielsweise 0,005 kg, die durch eine zusätzliche Gummilage oder dergleichen realisiert werden kann, so ergibt eine erste Abschätzung die je Umdrehung des Reifens zu erwartende Ladungsmenge

$$Q = d_{33} \cdot m \cdot a \Rightarrow$$

$$Q = 400 \frac{pC}{N} \cdot 5 \cdot 10^{-3} kg \cdot 10000 \cdot 9{,}81 \frac{m}{\sec^2} \Rightarrow$$

$$Q \approx 0{,}2 \mu C$$

Somit lassen sich genügend große Ladungsmengen erzeugen, die natürlich je nach Ausführung der erfindungsgemäßen Vorrichtung in einem großen Bereich variiert werden können.

Ein sehr großer Vorteil lässt sich erzielen, wenn die piezokeramischen Bauteile als Fasern ausgeführt sind, z.B. als Zylinder mit Durchmessern in der Größenordnung von 100 $\mu$m.

Solche Fasern lassen sich relativ kostengünstig und in Großserie beispielsweise mit Hilfe eines Extrusionsprozesses herstellen bzw. in Form bringen. Mit den in der keramischen Industrie bekannten Methoden und Prozessen können diese Fasern nach elektrischer Kontaktierung und Polung im $d_{33}$ Modus betrieben werden, was eine hohe Energieausbeute sicherstellt.

Natürlich sind auch andere Dimensionen und Geometrien denkbar und können je nach Anwendungsfall vorteilhaft sein, beispielsweise quaderförmige Fasern oder dergleichen.

Diese Fasern lassen sich dann entweder direkt bei der Herstellung des Reifens in den inneren Aufbau des Reifens einbringen oder sie lassen sich unabhängig vom Reifen mit elastischen Folien kombinieren. Somit entsteht ein elastisches Verbundbauteil, das in Form von sog. Patches in die Struktur des Reifens eingebracht werden kann.

Solche Patches sind auch unter dem Namen Macro Fiber Composites (MFC) bekannt.

Der große Vorteil der wie auch immer realisierten Faserstrukturen liegt nun darin, dass sie die relativ hohen Deformationen beim Auftreffen der Lauffläche auf die Fahrbahn sehr gut überstehen können und dabei weniger anfällig für mechanisches Versagen sind.

Dies wird insbesondere dann erreicht, wenn die Fasern quer zur Lauffläche und parallel zueinander angeordnet sind. Dann sind sie wegen der mechanischen Entkopplung beispielsweise als Verbundbauteil bei den typischen Verformungen des Reifens in der Größenordnung 5 bis 10 % sehr stabil gegenüber diesen Verformungen und halten diesen Belastungen stand.

Normalerweise liegen die Belastungsgrenzen von piezokeramische Plättchen gegenüber Verformungen im Promillebereich, die nach Stand der Technik ausgeführten Piezogeneratoren (piezokeramische Plättchen plus Kontaktierung) würden also unter diesen Bedingungen beim Auftreffen der Lauffläche auf die Fahrbahn zerstört werden.

Durch gezielte Einstellung des Füllgrades der Patches mit piezokeramischen Fasern lassen sich diesbezüglich optimale Bedingungen einstellen. Denkbar ist die Abstände der parallel angeordneten Fasern zu variieren, angefangen von direkt benachbart bis hin zu Vielfachen der Faserdurchmesser bzw. -breiten (je nach Geometrie)

Vorteilhaft ist es auch, wenn über den Umfang der Reifeninnenfläche mehrere Faserbereiche oder Patches gleichmäßig verteilt sind, damit lässt sich die Unwucht minimieren und die Energiebereitstellung um ein Vielfaches erhöhen.

In einer weiteren vorteilhaften Variante sind die Faserbereiche schmaler als die Aufstandsfläche des Reifen. So wird die erzeugte Ladung nicht durch die zwar symmetrisch aber gegenläufigen Abläufe beim Auftreffen der Reifenfläche auf und beim Abziehen der Reifenfläche von der Fahrbahn kompensiert.

Vorteilhaft kann auch sein, wenn die Faserbereiche sich ganz, bzw. mehr oder weniger durchgehend über die Innenfläche erstrecken.

Dabei erzielt man ein Maximum an Energieausbeute, allerdings muss man durch geeignete elektronische Ansteuerung dafür sorgen, dass sich die piezoelektrischen Effekte zur Ladungserzeugung wie oben beschrieben nicht aufheben.

Dies kann z.B. durch eine Gruppenbildung realisiert werden, so dass eine erste Gruppe von Patches von einer Elektronikeinheit angesteuert wird, die beim Auftreffen der Lauffläche auf die Fahrbahn Energie erzeugt, und eine zweite Gruppe von Patches von einer zweiten Elektronikeinheit angesteuert wird, die beim Verlassen der Lauffläche von der Fahrbahn Energie erzeugt.

Der Abstand der einzelnen Patches kann auch so geregelt sein, dass eine Gruppe von Patches in obigem Sinne ausreicht.

Statt der Faserstrukturen wären durchaus auch durchgehende piezokeramische Platten oder Plättchen entsprechender Geometrie geeignet. Diese würden zwar - wie schon erwähnt - im Betrieb zerstört werden, die erfindungsgemäße Funktion jedoch könnte durch eine geeignete Kontaktierung aufrechterhalten werden.

Eine geeignete Kontaktierung könnte durch eine Art flexibles, elektrisch leitfähiges Netzwerk auf diesen Platten gebildet werden, welches die hohen Deformationen im Betrieb des Reifens überlebt.

Genauso wäre in einer weiteren Ausführungsform denkbar, piezokeramische Platten während des Herstellungsprozesses mit einer Prägung zu versehen, dergestalt, dass die Platten bei der Produktion oder während des Betriebs automatisch in definierte Fasern zerbrechen.

In einer vorteilhaften Ausführungsform wird die Vorrichtung zum Messen des Reifendrucks und/oder zur Bestimmung der fahrbahn- und/oder fahrdynamischen Eigenschaften verwendet.

Wenn ein Reifen an einem Kraftfahrzeug einen zu geringen Druck aufweist, ist die Aufstandsfläche des Reifens auf der Straße größer als bei einem Reifen mit korrekt eingestelltem Druck. Hieraus folgt ein anderes Messsignal der Vorrichtung. Wird dieses Messsignal abgegriffen und mit dem Messsignal eines Reifens mit korrektem Druck verglichen, kann so entweder der Druck im Reifen und/oder ein Signal für einen Reifen mit zu niedrigem Druck erzielt werden. Dieses Signal muss dann noch in geeigneter Weise angezeigt werden. Über die Verformung des Reifens in der Straßenebene kann auch auf die Fahrbahn und fahrdynamischen Eigenschaften geschlossen werden.

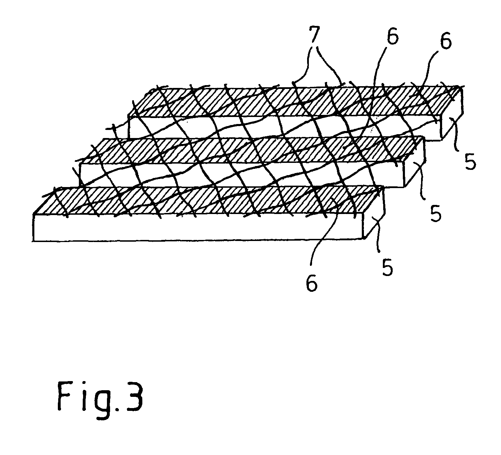

In Fig. 2 ist ein bevorzugtes Ausführungsbeispiel der erfindungsgemäßen Vorrichtung dargestellt. Figur 3 zeigt die erfindungsgemäßen Fasern 5 oder Faserstrukturen mit jeweils einer Elektrode 6 und die zugehörige Außenelektrode 7.

Das rotierende System 1 ist ein Reifen für ein Fahrzeug, vorzugsweise ein Kraftfahrzeug oder ein Motorrad, mit einer Lauffläche 8, einer Seitenfläche 11 aus einem gummiartigen Verbundmaterial nach dem Stand der Technik. Die Drehrichtung 9 auf der Fahrbahn 10 ist mit einem Pfeil angedeutet. In die Lauffläche 8 sind piezokeramische Faserstrukturen oder Fasern 5 (siehe Figur 3) eingelassen, auf die im Betrieb unterschiedlich starke Beschleunigungskräfte wirken. Dadurch entstehen Ladungen, die über die mit den Fasern elektrisch verbundene Elektronik- und Steuereinheit 4 gespeichert und gesteuert werden können. Die Elektronik- und Steuereinheiten 4 befinden sich an der Innenseite der Lauffläche 8, also dort, wo auch die Faserstrukturen bzw. Fasern 5 angeordnet sind. Damit können beispielsweise Sensorelemente 2 zur Messung des Reifendrucks oder andere Sensorik bzw. auch Kommunikationselemente 3 oder sonstige elektronische Bauteile versorgt werden. Die Fasern 5 sind dabei zu Gruppen von Fasern 5 verbunden, wie in der Figur 3 gezeigt zu vier Gruppen und werden durch die auf den Reifen wirkende Kräfte und Deformationen nicht zerstört. Die piezoelektrischen Fasern 5 müssen nicht notwendigerweise in vier Gruppen oder Teilbereiche aufgeteilt sein, es können beliebig viele oder auch nur ein Bereich sein. Wichtig ist, dass unabhängig von der Anzahl bzw. der Dimension dieser Bereiche diese elektrisch in einzelne Unterbereiche getrennt werden. Grund dafür ist, dass sich die Effekte zur Ladungserzeugung sonst aufheben können, aufgrund richtungsabhängiger Vorgänge beim Auftreffen der Lauffläche auf die Fahrbahn und beim Loslösen der Lauffläche von der Fahrbahn.

Figur 3 zeigt in einem Ausschnitt drei Fasern 5, die jeweils eine Elektrode 6 aufweisen. Über eine Außenelektrode 7 sind die Elektroden 6 miteinander elektrisch verbunden. Die Außenelektrode 7 besteht aus einem feinen Drahtnetz, welches hochflexibel, dreidimensional strukturiert und aus einem Metall besteht und über und/oder unter den Fasern angeordnet ist. Die Fasern 5 können auf die Elektroden 6 geklebt, eingebrannt oder gelötet werden. Die elektrische Verdrahtung könnte so aussehen, dass die einzelnen Fasern 5, Faserbereiche oder Faserstrukturen über die Außenelektrode 7 elektrisch untereinander und mit der Einheit aus Elektronik 6, Sensorelement 2 zur Erfassung des Luftdrucks sowie des Kommunikationselementes 3 verbunden sind, beispielsweise durch in den Reifen einlaminierte Kabel oder sonstige Leiterbahnen.

**Patentansprüche**

1. Vorrichtung zur Erzeugung von elektrischer Energie in einem rotierenden System (1) zur Versorgung von elektronischen Bauteilen (2, 3) im System mit Strom, mit auf das System einwirkenden äußeren Kräften, die auf piezoelektrisch aktive Energiewandler im System wirken wodurch elektrische Energie erzeugt wird, und mit einer Elektronik (4) zur Verarbeitung der erzeugten elektrischen Energie und Weiterleitung dieser an die Bauteile(2, 3), wobei die piezoelektrisch aktiven Energiewandler piezokeramische Fasern (5) sind, die jeweils über eine Elektrode (6) verfügen und die Elektroden (6) der Fasern, die eine Ladung gleicher Polarität erzeugen, über eine elektrisch leitende Außenelektrode (7) verbunden sind, **dadurch gekennzeichnet, dass** die Fasern (5) voneinander mechanisch entkoppelt sind.

2. Vorrichtung nach Anspruch 1, **dadurch gekennzeichnet, dass** das rotierende System (1) ein Reifen insbesondere für ein Kraftfahrzeug ist.

3. Vorrichtung nach Anspruch 1 oder 2, **dadurch gekennzeichnet, dass** die Fasern (5) an der Innenseite des rotierenden Systems (1) und bei einem Reifen an der Innenseite der Lauffläche (8) angebracht sind oder in diese integriert sind.

4. Vorrichtung nach einem der vorhergehenden Ansprüche, **dadurch gekennzeichnet, dass** die Fasern (5) in Querrichtung zur Lauffläche (8) des rotierenden Systems (1) oder Reifens und bevorzugt parallel zueinander angeordnet sind.

5. Vorrichtung nach einem der vorhergehenden Ansprüche, **dadurch gekennzeichnet, dass** die Fasern (5) einen Durchmesser von 0,01 mm - 5 mm, bevorzugt von 0,05 mm - 2 mm, besonders bevorzugt 0,1 mm - 0,5 mm aufweisen.

6. Vorrichtung nach einem der vorhergehenden Ansprüche, **dadurch gekennzeichnet, dass** die Fasern (5) durch Extrusion hergestellt sind.

7. Vorrichtung nach einem der vorhergehenden Ansprüche, **dadurch gekennzeichnet, dass** die Fasern (5) durch Zersägen einer plattenförmigen Piezokeramikscheibe hergestellt sind.

8. Vorrichtung nach einem der vorhergehenden Ansprüche, **dadurch gekennzeichnet, dass** die Fasern (5) zur Ableitung der entstehenden Ladungen über eine hochflexible, dreidimensional strukturierte, metallische Außenelektrode (7) zu Gruppen von Fasern (5) verbunden sind, die durch die auf das System (1) oder den Reifen wirkenden Kräfte und Deformationen nicht zerstört wird.

9. Vorrichtung nach einem der Ansprüche 1 bis 8, **dadurch gekennzeichnet, dass** die Außenelektrode (7) aus einem feinen Drahtnetz besteht.

10. Vorrichtung nach einem der Ansprüche 1 bis 9, **dadurch gekennzeichnet, dass** der Abstand der Fasern (5) oder der Gruppen von Fasern (5) so gewählt ist, dass die erzeugte Ladung einzelner Fasern (5) oder Gruppen von Fasern (5) nie gleichzeitig die gegensätzliche Polarität haben.

11. Vorrichtung nach einem der Ansprüche 1 bis 10, **dadurch gekennzeichnet, dass** die Fasern (5) oder die Gruppen von Fasern (5), die eine Ladung gleicher Polarität erzeugen, elektrisch zusammengefasst sind und mit einer getrennten Gleichrichterschaltung verbunden sind, so dass eine Neutralisation der Ladungen unterbleibt.

12. Vorrichtung nach einem der vorhergehenden Ansprüche, **dadurch gekennzeichnet, dass** die Vorrichtung zur Messung des Reifendrucks und/oder zur Bestimmung der fahrbahn- und/oder fahrdynamischen Eigenschaften eines Kraftfahrzeugs verwendet wird.

13. Vorrichtung nach einem der vorhergehenden Ansprüche, **dadurch gekennzeichnet, dass** das mit der Vorrichtung gemessene Signal mit einem Sollwert verglichen wird und bei Überschreitung oder Unterschreitung des Sollwerts ein Signal angezeigt wird.

14. Verfahren zur Herstellung von Fasern (5) zur Verwendung für eine Vorrichtung nach einem der Ansprüche 1 bis 13, **dadurch gekennzeichnet, dass** die Fasern (5) im unbenutzten Neuzustand, d.h. als Rohlinge piezokeramische Platten oder Plättchen sind, die während des Herstellungsprozesses mechanisch so bearbeitet werden, dass sie bei der Produktion oder während des Betriebs automatisch in definierte Fasern (5) zerbrechen.

**Claims**

1. Device for generating electrical energy in a rotating system (1) for the purpose of supplying current to electronic components (2, 3) in the system, having external forces, acting on the system, that act on piezoelectrically active energy converters in the system, as a result of which electrical energy is generated, and having an electronic system (4) for processing the generated electrical energy and transferring it to the components (2, 3), wherein the piezoelectrically active energy converters are piezoceramic fibres (5), each of which has an electrode (6), and the electrodes (6) of the fibres, which generate a charge of like polarity, are connected via an electrically conductive external electrode (7), **characterized in that** the fibres (5) are mechanically decoupled from one another.

2. Device according to Claim 1, **characterized in that** the rotating system (1) is a tyre, in particular for a motor vehicle.

3. Device according to Claim 1 or 2, **characterized in that** the fibres (5) are attached to the inside of the rotating system (1), and in the case of a tyre are attached to the inside of the running surface (8), or are integrated into the latter.

4. Device according to any one of the preceding claims, **characterized in that** the fibres (5) are arranged in the transverse direction relative to the running surface (8) of the rotating system (1) or tyre, and preferably parallel to one another.

5. Device according to any one of the preceding claims, **characterized in that** the fibres (5) have a diameter of 0.01 mm - 5 mm, preferably of 0.05 mm - 2 mm, particularly preferably 0.1 mm - 0.5 mm.

6. Device according to any one of the preceding claims, **characterized in that** the fibres (5) are produced by extrusion.

7. Device according to any one of the preceding claims, **characterized in that** the fibres (5) are produced by sawing up a plate-type piezoceramic piece.

8. Device according to any one of the preceding claims, **characterized in that** the fibres (5), for the purpose of leading off the resultant charges, are connected in groups of fibres (5), via a highly flexible, three-dimensionally structured, metallic external electrode (7), which is not destroyed by the forces and deformations acting on the system (1) or tyre.

9. Device according to any one of Claims 1 to 8, **characterized in that** the external electrode (7) is constituted by a fine wire mesh.

10. Device according to any one of Claims 1 to 9, **characterized in that** the spacing of the fibres (5) or of the groups of fibres (5) is selected so that the generated charge of individual fibres (5) or groups of fibres (5) is never simultaneously of the opposite polarity.

11. Device according to any one of Claims 1 to 10, **characterized in that** the fibres (5) or the groups of fibres (5) that generate a charge of like polarity are electrically combined and connected to a separate rectifier circuit so that there is no neutralizing of the charges.

12. Device according to any one of the preceding claims, **characterized in that** the device is used for measuring the tyre pressure and/or for determining the road-holding and/or movement dynamics of a motor vehicle.

13. Device according to any one of the preceding claims, **characterized in that** the signal measured by means of the device is compared with a setpoint, and a signal is displayed if the setpoint is exceeded or not attained.

14. Method for producing fibres (5) for use for a device according to any one of Claims 1 to 13, **characterized in that** the fibres (5) in the unused, new state, i.e. as unworked pieces, are piezoceramic plates or lamellae, which during the production process are mechanically worked in such a way that they automatically break into defined fibres (5) during production or during operation.

**Revendications**

1. Dispositif de production d'énergie électrique dans un système en rotation (1), en vue de l'alimentation en courant de composants (2, 3) électroniques dans le système, avec des forces extérieures agissant sur le système, qui agissent sur des convertisseurs d'énergie à action piézoélectrique, produisant ainsi de l'énergie électrique, et comprenant une électronique (4) pour le traitement de l'énergie électrique produite et pour la transmission de celle-ci aux composants (2, 3), les convertisseurs d'énergie à action piézoélectrique étant des fibres piézocéramiques (5) qui sont chacune dotées d'une électrode (6), et les électrodes (6) des fibres qui produisent une charge de même polarité étant reliées par l'intermédiaire d'une électrode externe (7) électriquement conductrice, **caractérisé en ce que** les fibres (5) sont découplées mécaniquement les unes des autres.

2. Dispositif selon la revendication 1, **caractérisé en ce que** le système en rotation (1) est un pneu, destiné en particulier à un véhicule automobile.

3. Dispositif selon la revendication 1 ou 2, **caractérisé en ce que** les fibres (5) sont disposées sur la face interne du système en rotation (1) et, dans le cas d'un pneu, sur la face interne de la bande de roulement (8) ou sont intégrées dans celle-ci.

4. Dispositif selon une des revendications précédentes, **caractérisé en ce que** les fibres (5) sont disposées dans le sens transversal par rapport à la bande de roulement (8) du système en rotation (1) ou du pneu, de préférence parallèlement les unes aux autres.

5. Dispositif selon une des revendications précédentes, **caractérisé en ce que** les fibres (5) ont un diamètre de 0,01 mm à 5 mm, de préférence de 0,05 mm à 2 mm, et notamment de 0,1 mm à 0,5 mm.

6. Dispositif selon une des revendications précédentes, **caractérisé en ce que** les fibres (5) sont produites par extrusion.

7. Dispositif selon une des revendications précédentes, **caractérisé en ce que** les fibres (5) sont produites par sciage d'un disque piézocéramique en forme de plaque.

8. Dispositif selon une des revendications précédentes, **caractérisé en ce que**, pour évacuer les charges produites, les fibres (5) sont reliées en groupes de fibres (5) par une électrode externe (7) métallique, hautement flexible, à structure tridimensionnelle, qui n'est pas détruite par les forces et déformations agissant sur le système (1) ou le pneu.

9. Dispositif selon une des revendications 1 à 8, **caractérisé en ce que** l'électrode externe (7) est constituée d'un treillis en fil métallique.

10. Dispositif selon une des revendications 1 à 9, **caractérisé en ce que** l'espacement des fibres (5) ou des groupes de fibres (5) est choisi tel que les charges produites de fibres individuelles (5) ou de groupes de fibres (5) ne présentent jamais simultanément des polarités opposées.

11. Dispositif selon une des revendications 1 à 10, **caractérisé en ce que** les fibres (5) ou les groupes de fibres (5) qui produisent une charge de même polarité sont regroupé(e)s électriquement et sont relié(e)s à un montage redresseur séparé, de sorte qu'il n'y a pas de neutralisation des charges.

12. Dispositif selon une des revendications précédentes, **caractérisé en ce que** le dispositif est utilisé pour mesurer la pression de pneu et/ou pour déterminer les propriétés de la chaussée et/ou les propriétés dynamiques de déplacement d'un véhicule automobile.

**13.** Dispositif selon une des revendications précédentes, **caractérisé en ce que** le signal mesuré avec le dispositif est comparé avec une valeur de consigne et, en cas de dépassement de la valeur de consigne vers le haut ou vers le bas, un signal est émis.

**14.** Procédé de fabrication de fibres (5) destinées à être utilisées pour un dispositif selon une des revendications 1 à 13, **caractérisé en ce que** les fibres (5), à l'état neuf non utilisé, c'est-à-dire en tant que pièces brutes, sont des plaques ou des plaquettes piézocéramiques qui sont traitées mécaniquement pendant le processus de fabrication, de manière à ce que, lors de la production ou pendant le fonctionnement, elles se brisent automatiquement pour donner des fibres (5) définies.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60310104 T2
- EP 1650057 A2